# EUROPEAN PATENT SPECIFICATION

(11) **EP 3 712 852 B1**
(45) Date of publication and mention of the grant of the patent: **15.12.2021**
(21) Application number: 19163688.5
(22) Date of filing: 19.03.2019
(51) Int. Cl.: G06T 7/70, F25D 29/00

(54) **REFRIGERATED SALES CABINET**
VERKAUFSKÜHLVITRINE
ARMOIRE DE VENTE RÉFRIGÉRÉE

(43) Date of publication of application: 23.09.2020
(73) Proprietor: Carrier Corporation, Palm Beach Gardens, FL 33418 (US)
(72) Inventor: Oggianu, Stella M., Farmington, CT 06032 (US); Dixon, Wanita, Palm Beach Gardens, FL 33418 (US); Van Der Linden, Marius, 4104 AW, Culemborg (NL); Vallee, Christophe, 55246 Mainz-Kostheim (DE)
(74) Representative: Schmitt-Nilson Schraud Waibel Wohlfrom Patentanwälte Partnerschaft mbB

(56) References cited:
- WO-A1-2015/192117
- WO-A2-02/07839
- US-B1- 10 169 677

## Description

The invention relates to a refrigerated sales cabinet.

Refrigerated sales cabinets in supermarkets are often equipped with doors at their front, either sliding doors or hinged doors, which are operated by the customers who open and close them, in order to take goods out of the refrigerated sales space and to put them back into the refrigerated sales space, if desired.

In order to obtain information and specifications of particular goods, customers have to open up the doors and take them out of the refrigerated sales space. This makes the gathering of the specifications of the goods complicated and time-consuming.

Furthermore, cool air flows out of the refrigerated sales space, during such opening, which causes a waste of energy.

US 10,169,677 B1 shows a system for counting stacked items using image analysis. In one implementation, an image of an inventory location with stacked items is obtained and processed to determine the number of items stacked at the inventory location. In some instances, the item closest to the camera that obtains the image may be the only item viewable in the image. Using image analysis, such as depth mapping or Histogram of Oriented Gradients (HOG) algorithms, the distance of the item from the camera and the shelf of the inventory location can be determined. Using this information, and known dimension information for the item, a count of the number of items stacked at an inventory location may be determined.

In column 12 of US 10,169,677 B1, a refrigerated inventory area is disclosed. However this document does not show a refrigerated sales cabinet.

US 10,169,677 B1 also does not show that the memory comprises datasets of the different goods stored in the refrigerated sales space, each dataset comprising the position of the respective goods within the refrigerated sales space and goods specifications of these goods. The control unit of US 10,169,677 B1 is not configured to determine both the position and the direction of a pointing means of a person standing in the viewing area in front of the refrigerated sales cabinet by image processing of at least two pictures captured by the at least two cameras and/ or position markers in or around the cabinet; to calculate the target position within the refrigerated sales space to which the pointing means points; to associate the dataset of the goods positioned at such target position within the refrigerated sales space to the calculated target position; and to transfer goods specifications of such dataset to a display means for display of the goods specifications.

WO 2015/192117 A1 discloses configurations for presenting virtual reality and augmented reality experiences to users. The system may comprise an image capturing device to capture one or more images, the one or more images corresponding to a field of the view of a user of a head-mounted augmented reality device, and a processor communicatively coupled to the image capturing device to extract a set of map points from the set of images, to identify a set of sparse points and a set of dense points from the extracted set of map points, and to perform a normalization on the set of map points.

It is therefore an object of the present invention to provide a refrigerated sales cabinet which is more energy-efficient and which enables faster and easier access to the specifications of the goods stored therein.

A refrigerated sales cabinet according to exemplary embodiments of the invention comprises a refrigerated sales space in which different goods to be sold are located in different positions; a control unit; and at least two cameras positioned spaced apart from each other and configured to capture pictures of a viewing area in front of the refrigerated sales cabinet.

The control unit comprises or is connected to a memory, wherein the memory comprises datasets of the different goods stored in the refrigerated sales space, each dataset comprising the position of the respective goods within the refrigerated sales space and goods specifications of these goods.

The control unit is configured to determine both the position and the direction of a pointing means of a person standing in the viewing area in front of the refrigerated sales cabinet by image processing of at least two pictures captured by the at least two cameras; to calculate the target position within the refrigerated sales space to which the pointing means points; to associate the dataset of the goods positioned at such target position within the refrigerated sales space to the calculated target position; and to transfer the specifications of the goods of the associated dataset to a display means for display of the goods specifications.

Such refrigerated sales cabinet is energy-efficient, since customers do not have to take out goods from the refrigerated sales space in order to access the specifications of particular goods by reading the text on the packaging. Instead, customers simply point with their pointing means, particularly with their finger to particular goods of interest within the refrigerated sales space. The control unit then determines both the position and the direction of the pointing means of such person standing in the viewing area in front of the refrigerated sales cabinet by image possessing of at least two pictures captured by the at least two cameras. The control unit calculates the target position within the refrigerated sales space to which the pointing means points, it associates the dataset of the goods positioned at such target position within the refrigerated sales space to the calculated target position, and it transfers the goods specifications of such dataset to a display means for displaying the goods specifications.

These goods specifications can be displayed for example on a transparent door of the refrigerated sales cabinet or on a mobile device, particularly a smart phone or tablet, of the customer to which those goods specifications can be transferred. Therefore, the desired goods specifications can be obtained more easily and quickly, and energy can be saved, especially if the refrigerated sales cabinet comprises at least one transparent door, since the doors do not have to be opened in order to obtain such goods specifications, which reduces the amount of cool air flowing out of the refrigerated sales space significantly.

The goods specification to be displaced include price, nutrition information, expiration date, recipes, comparison with similar products, temperature or a supply chain history, etc.

The datasets can be static in the memory of the controller or dynamically updated by using technologies that recognize the products, including scan codes or video analytics.

As a further advantage, the refrigerated sales cabinet according to exemplary embodiments of the invention is perceived by the customers as interactive and to provide a personalized customer experience.

According to a first embodiment of the invention, the refrigerated sales cabinet further comprises at least one transparent door, and the at least two cameras are configured to capture pictures of a viewing area in front of the at least one transparent door.

According to another embodiment of the invention, at least two cameras are positioned at the front of the roof portion of the cabinet body of the refrigerated sales cabinet, particularly at left and right edges of at least one transparent door of the refrigerated sales cabinet. The at least two cameras can be configured such that their viewing ranges overlap in front of the at least one transparent door; and the area in which the viewing ranges of the at least two cameras overlap forms the viewing area. The viewing area can extend over substantially the entire width of the at least one transparent door.

Such embodiment is particularly effective in image recognition (e.g. determining whether there is a pointing means, particularly a finger or a similar object purposely pointing at a certain goods), and in determining both the position and the direction of a pointing means of a person positioned anywhere in front of the at least one transparent door, as long as such pointing means is within the viewing area.

According to a further embodiment of the invention, the pointing means is a finger, a hand or a fist or another object of a person standing in the viewing area in front of the refrigerated sales cabinet, particularly in front of the at least one transparent door.

According to a further embodiment of the invention, the control unit is configured to detect the pointing means by image processing of at least two pictures taken from different positions by the at least two cameras; and optionally, to remove the background of the pointing means and other portions of the person by image processing; and to determine the position of the pointing means in the viewing area in front of the at least one transparent door, in order to determine the position of a pointing means of a person standing in the viewing area in front of the at least one transparent door.

In order to determine the position of the pointing means in the viewing area in front of the at least one transparent door the principle of triangulation can be used. The distance of the two cameras to each other is known, and the angle between the vertical plane in which the two cameras are situated and the vertical plane which includes the position of the pointing means can be calculated. From these values the position of the pointing means in the viewing area can be determined.

This embodiment provides for an efficient pointing means recognition and for a precise determination of the position of the pointing means within the viewing area in front of the at least one transparent door.

According to a further embodiment of the invention, the refrigerated sales cabinet further comprises markers around the refrigerated sales cabinet to improve the accuracy of the determination for pointing means position and direction.

According to a further embodiment of the invention, wherein the control unit is configured to determine a pointing means direction line, particularly using the principle of triangulation for at least two distinct points of the pointing means, in order to determine the direction of the pointing means of the person standing in the viewing area in front of the at least one transparent door. With this embodiment the pointing means direction can be determined precisely.

According to a further embodiment of the invention, the control unit is configured to extend the pointing means direction line, from the determined pointing means position, to the refrigerated sales space, particularly to a vertical plane extending through the front portion of the refrigerated sales space, in order to calculate the target position within the refrigerated sales space to which the pointing means points. With this embodiment the target position within the refrigerated sales space to which the pointing means points can be reliably calculated.

According to a further embodiment of the invention, the at least two cameras are configured to capture pictures of a viewing area in front of the at least one transparent door, once a person enters the viewing area.

According to a further embodiment of the invention, the at least two cameras are configured to continuously capture pictures of a viewing area in front of the at least one transparent door.

According to a further embodiment of the invention, the control unit is configured to continuously determine both the position and the direction of a pointing means of a person standing in the viewing area in front of the transparent door by image processing of a series of at least two pictures captured by the at least two cameras; and to carry out one or more of the following steps if the position and the direction of the pointing means determined by the control unit remains unchanged for a predetermined period of time: calculating the target position within the refrigerated sales space to which the pointing means points; associating the dataset of the goods positioned at such target position within the refrigerated sales space to the calculated target position; and transferring goods specifications of such dataset to a display means for display of the goods specifications.

The predetermined period of time can be -but is not limited to- a range of 1 to 8, particularly 2 to 5 sec. By this embodiment it is ensured that the goods specifications of the particular goods to which the pointing means of the person standing in front of the refrigerated sales cabinet points, are only displayed if the pointing means has pointed to towards these products for such predetermined period of time. In other words, the customer has to point towards the products, the specifications of which he is interested in, for a predetermined period of time without moving his pointing means, for example for at least 1 or 2 sec.

According to a further embodiment of the invention, two or more pairs of cameras are provided for laterally adjacent sections of the refrigerated sales cabinet. A first pair of cameras is provided and configured to capture pictures of a first viewing area in front of at least one transparent door; and a second pair of cameras is provided and configured to capture pictures of a second viewing area in front of at least one transparent door, laterally adjacent the first viewing area.

The invention can also be used in any cabinet, and is not limited to refrigerated sales cabinets. The applicant reserves the right to draw an independent claim onto a cabinet not comprising the limitation that it is refrigerated.

This embodiment is suitable for wide refrigerated sales cabinets. Two or more pairs of cameras are provided for laterally adjacent portions of width of the refrigerated sales cabinet. For each such camera pair the above-mentioned features, embodiments and advantages apply, which are not repeated here for brevity.

According to a further embodiment of the invention, the control unit is configured to monitor how many times pointing means, particularly fingers of persons standing in the viewing area in front of the transparent door have pointed to which products. With such an embodiment information on people's behaviour can be collected, and the placement of the products within the refrigerated sales space can be improved using such information. This allows for an improved and targeted placement of goods and an improved and targeted merchandising opportunity.

According to a further embodiment of the invention, the display means is formed as a display at the front side of the refrigerated sales cabinet, particularly at a transparent door, or as a projector configured to project the goods specifications on the front side of the refrigerated sales cabinet, particularly on a transparent door. The control unit can be further configured to cause the display or the projector to display the goods specifications of such dataset. The goods specifications of the goods can include price, nutrition information, expiration date, recipes, comparison with similar products, temperature or a supply chain history, etc.

By way of this embodiment, the goods specifications are directly displayed at the front side of the refrigerated sales cabinet, particularly at a transparent door thereof, which is particularly user-friendly.

Further exemplary embodiments of the invention relate to an arrangement of a refrigerated sales cabinet as described herein and a mobile device, particularly a smart phone or tablet. The control unit of the refrigerated sales cabinet is further configured to cause the display of the mobile device of the person standing in the viewing area in front of the at least one transparent door to display the goods specifications of the respective goods.

In such arrangement, the goods specifications of the goods in the target position to which the pointing means of the person standing in the viewing area in front of the transparent door points are displayed on the display of the mobile device. When multiple people are in front of the cabinet, an image recognition algorithm can be used to ensure the connection between the person, its pointing finger and the device are related to the same person.

In a further embodiment, the arrangement, particularly the control unit further comprises a video analytics algorithm to determine which mobile device corresponds to the person pointing at which product is incorporated.

In a further embodiment, the control unit of the refrigerated sales cabinet is further configured to transfer the goods specifications of such dataset to the mobile device of the person standing in the viewing area in front of the at least one transparent door, using a mobile device network or a cloud computer system.

In the following, a refrigerated sales cabinet according to exemplary embodiments of the invention is described in more detail with respect to the enclosed figures.
Fig. 1 shows a perspective view of a refrigerated sales cabinet 2 with its two doors 8 being in their respective closed positions, with two pairs of cameras 14, 16 and 18, 20 positioned at positions at the front end of the roof portion of the refrigerated sales cabinet 2, and with a customer standing in front of the refrigerated sales cabinet 2 and pointing with his/her finger 24 towards particular products within the refrigerated sales space;
Fig. 2 shows a side view of the refrigerated sales cabinet 2 and the left camera 14 of figure 1, with a finger 24 of a person standing in front of the transparent door 8 being situated in the viewing area 22 of the cameras;
Fig. 3 shows a top view of the refrigerated sales cabinet 2 and the two pairs of cameras 14, 16 and 18, 20 of figures 1 and 2, wherein a finger 24 of a person standing in front of the left transparent door 8 is situated in the viewing area 22 of the left pair of cameras 14, 16;
Fig. 4 shows the refrigerated sales cabinet 2 of Fig. 1 wherein the goods specifications of the goods to which the finger 24 of the customer standing in front of the refrigerated sales cabinet points are displayed on the display 10; and
Fig. 5 shows the refrigerated sales cabinet 2 of Fig. 1 wherein the goods specifications of the goods to which the finger 24 of the customer standing in front of the refrigerated sales cabinet points are displayed on the display of a mobile device.

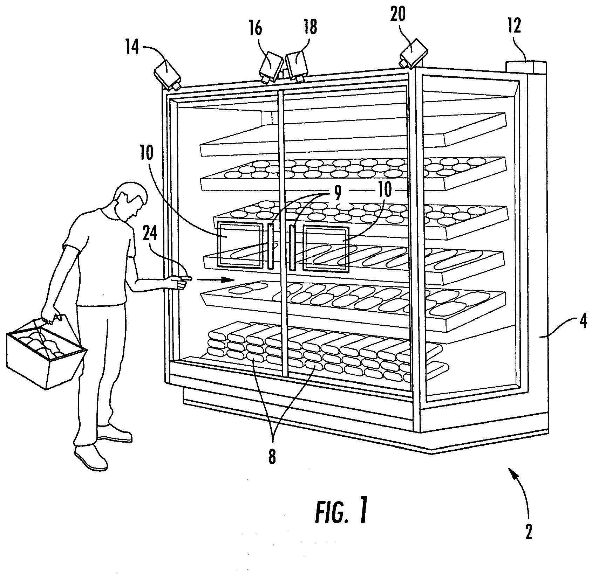

In the exemplary, non-limiting embodiment of figures 1 through 3, the refrigerated sales cabinet 2 comprises a cabinet body 4 with a bottom portion, a rear wall and a ceiling/roof portion as well as side walls. Within the cabinet body 4, a refrigerated sales space is formed in which refrigerated goods are stored and displayed. The refrigerated sales cabinet 2 comprises at least one evaporator and an expansion device associated therewith, of a vapor compression cycle. Refrigerant flows through such vapor compression cycle which comprises, in addition to the expansion device and the evaporator, a compressor unit, a condenser/liquefier and refrigerant conduits circulating a refrigerant therethrough. The at least one evaporator can be equipped with an evaporator fan configured for blowing or sucking air over the coils of the evaporator.

The front side of the refrigerated sales cabinet 2 is equipped with two doors 8 which are formed as hinged/pivoting doors in the embodiments of the Figures, but can also be formed as sliding doors. In figures 1 through 3, the refrigerated sales cabinet 2 comprises a cabinet body 4 with a bottom portion, a rear wall and a ceiling/roof portion as well as sidewalls. Within the cabinet body 4, a refrigerated sales space is formed in which refrigerated goods are stored and displayed. The refrigerated sales cabinet 2 comprises at least one evaporator and an expansion device associated therewith, of a vapor compression cycle. Refrigerant flows through such vapor compression cycle which comprises, in addition to the expansion device and the evaporator, a compressor unit, a condenser/liquefier and refrigerant conduits circulating a refrigerant. The at least one evaporator can be equipped with an evaporator fan configured for blowing or sucking air over the coils of the evaporator.

The front side of the refrigerated sales cabinet 2 is equipped with two doors 8 which are formed as hinged/pivoting doors in the embodiments of the Figures, but can also be formed as sliding doors. The doors can be operated manually, by means of handles 9, or automatically, by at least one door operation motor (not shown), between the closed and the opened positions.

The refrigerated sales cabinet 2 comprises for example two doors 8, namely a left door 8 and a right door 8. The doors can be transparent. As a matter of course, refrigerated sales cabinets can be equipped with any suitable number of doors.

Within the refrigerated sales cabinet 2 there is a refrigerated sales space in which different goods to be sold are stored at different positions, particularly supported by a number of shelves.

In the exemplary, non-limiting embodiment, two pairs of cameras 14, 16 and 18, 20 are positioned at the front end of the roof portion of the cabinet body 4. The left camera 14 of the first, left camera pair is arranged at a position of width corresponding to the left edge of the left transparent door 8, the right camera 16 of the first camera pair is positioned at a position of width corresponding to the right edge of the left transparent door 8. Likewise, the left camera 18 of the second, right camera pair is positioned at a position of width corresponding to the left edge of the right transparent door 8, and the right camera 20 of the second camera pair is arranged at a position of width corresponding to the right edge of the right transparent door 8.

It is to be understood that providing only two cameras/one pair of cameras, e.g. 14 and 16, is sufficient to determine both the position and the direction of a finger 24 of a person standing in the viewing area 22 in front of the refrigerated sales cabinet 2, particularly in front of the transparent door 8. With only two cameras 14 and 16, the direction and the absolute initial position of the finger 24 (e.g. x-,y-,z-positions of the finger) can be detected, particularly relative to some fixed point of the refrigerated sales cabinet 2.

More than one pair of cameras, e.g. 14+16 and 18+20 can be provided depending on the length of the refrigerated sales cabinet 2 and the viewing area/field of view.

Certain markers in or at the refrigerated sales cabinet 2 can be provided in addition, and they can be used in addition to identify the x-, y- and z-positions of the finger 24,

In this example, when positioning the cameras.14+16 and 18+20 on top of the refrigerated sales cabinet 2, it might be necessary to measure the height of the finger 24 in addition. This can be done in different ways. One way is to provide some discrete markers and have some way of image identification.

In the exemplary, non-limiting embodiment, a first display 10 is formed at the left transparent door 8, and likewise a second display 10 is formed at the right transparent door 8. However, it is to be understood, that providing at least one, including only one display, in front of the person who is pointing at particular goods within the refrigerated sales space, particularly on the shelves, is also sufficient.

The displays 10 are depicted as rectangular transparent portions of the transparent doors 8 and 10. They can be formed at or within the glass panes of the transparent doors 8 and 10. Alternatively, they can be formed as one or two projectors (not shown) arranged and configured to cause a display in said rectangular portions.

Furthermore, the refrigerated sales cabinet 2 of Fig. 1 comprises a control unit 12 which can be arranged at or on top of the roof portion of the refrigerated sales cabinet 2, particularly at a rear portion thereof.

The cameras 14, 16, 18 and 20 are in signal communication with the control unit 12.

Likewise, the control unit 12 is in signal communication with the displays 10.

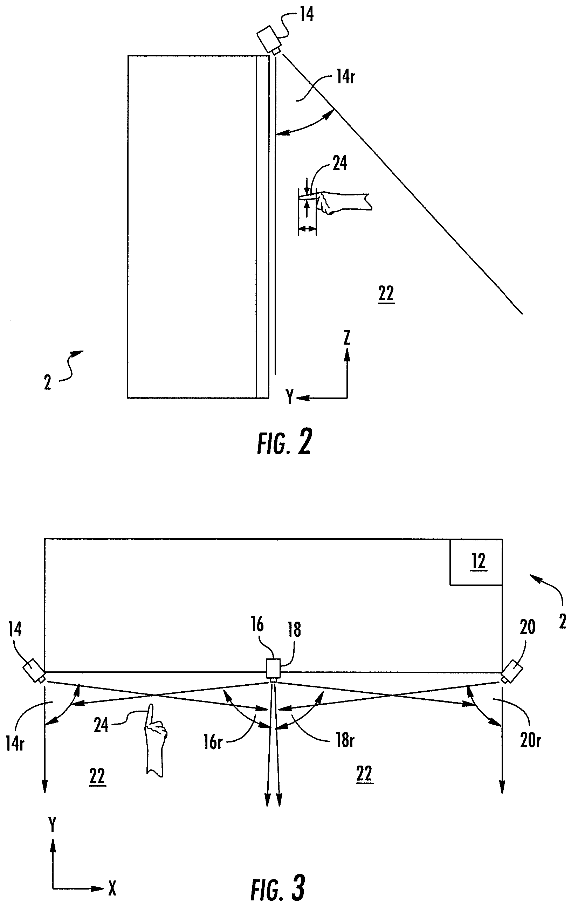

In the side view of Fig. 2, the camera viewing range 14r of the left camera 14 of the first camera pair can well be seen.

This viewing range 14r extends from a first vertical plane which is parallel to the front side of the refrigerated sales cabinet 2 to a second inclined plane that includes an angle with said vertical plane of about 20 to 60 particularly 30 to 50°.

As will be explained in more detail with respect to Fig. 3, the viewing ranges 14r, 16r and 18r, 20r of two cameras of one respective camera pair overlap to form the viewing area 22, in which pointing means of a person standing in front of the refrigerated sales cabinet 2, can be determined.

In the description of the figures, the pointing means is a finger 24 of a person standing in front of the refrigerated sales cabinet 2. However, it is to be understood, that the pointing means can also be a hand or a fist or another other object of a person standing in front of the refrigerated sales cabinet 2

In Fig. 2, it can well be seen that an arm and a hand including a finger 24 of a customer standing in front of the refrigerated sales cabinet 2 is within said viewing area 22.

In Fig. 3, the viewing ranges 14r, 16r, 18r and 20r of the cameras 14, 16, 18 and 20 can well be seen in a top view.

The viewing range 14r of the left camera 14 of the first, left pair of cameras 14, 16 extends between a first vertical plane lying within or being parallel to the plane of the left transparent door 8 or including a small angle of 1 to 10° therewith, and a second vertical plane extending from the left edge of the left transparent door 8 in a front direction and including an angle of about 90° with such first vertical plane.

Likewise, the viewing range 16r of the right camera 16 of the left pair of cameras 14, 16 extends between a first vertical plane lying within or being parallel to the plane of the left transparent door or including a small angle of 1 to 10° therewith, and a second vertical plane extending from the right edge of the left transparent door 8 in a front direction and including an angle of about 90° with such first vertical plane.

The area in which the viewing ranges 14r, 16r of the first, left pair of cameras 14, 16 overlap in front of the left transparent door 8 forms the viewing area 22, in which the two cameras 14 and 16 can capture pictures of one and the same object, particularly of a finger of a person standing in front of this left transparent door 8 from two different positions.

The control unit 12 further comprises a memory in which datasets of the different goods stored in the refrigerated sales space are stored.

Each dataset comprises the position of the respective goods within the refrigerated sales space, for example the particular shelf and the particular position on the shelf, and goods specifications of these goods including price, nutrition information, expiration date, recipes, comparison with similar products, temperature or a supply chain history, etc.

If a person stands in front of the refrigerated sales cabinet 2 and points with his finger to particular goods stored within the refrigerated sales space, the two cameras 14, 16 of the respective pair of cameras of the transparent door 8 in the front of which the customer stands, capture two pictures from different positions of the person and determine both the finger position and the finger direction of the finger by image possessing.

In order to determine the finger positions, x,y,z, markers can be provided at or in the refrigerated sales cabinet 2 that can reference at least the height of the finger 24. The x-position of the finger 24 can be determined based on the distance between the cameras 14 and 16. The y-position of the finger 24 can be determined based on certain markers or x,y relative positions.

In particular, at first the finger is detected in both pictures by using image processing, particularly by finger recognition. Optionally, the background of the finger and other portions of the person can be removed by image processing. Having detected the finger within the images captured the position of the finger in the viewing area in front of the transparent door is determined.

In doing so, the principle of triangulation can be used with the distance of the two cameras 14 and 16 to each other being known and with the angle between the vertical plane in which the two cameras 14 and 16 lie being known, as well.

Furthermore, the angle between the vertical plane in which the two cameras 14 and 16 are situated and the vertical plane which includes the position of the finger can be calculated.

With these values being known/having been calculated, the position of the finger 24 in the viewing area 22 in front of the left transparent door 8 can be determined.

In order to also determine the finger direction of the finger 24 of the person standing in the viewing area 22 in front of the left transparent door 8, the control unit 22 can determine a finger direction line, particularly using the principle of triangulation to determine at least two distinct points of the finger 24, e.g. the finger tip and another finger point like the finger base or an intermediate or middle point of the finger 24.

Having determined both the position and the direction of the finger 24, the control unit 12 calculates the target position within the refrigerated sales space to which the finger 24 points.

In order to calculate the target position within the refrigerated sales space to which the finger 24 points, the control unit 22 extends the finger direction line, from the determined finger position to the refrigerated sales space, particularly to a vertical plane extending through the front portion of the refrigerated sales space or the front edges of the shelves, within the refrigerated sales space. The control unit 22 must also know the coordinates of the finger x,y,z. A combination of image processing and markers in the cabinet or around can be used for this purpose.

Thereafter, the control unit 12 associates the dataset of the goods positioned at such target position within the refrigerated sales space, which is stored in the memory of the control unit 22, to the calculated target position.

Then, the goods specification of such dataset is transferred to the display 10 for display of these goods specifications. The database could either be static - where positions are pre-determined for each item type and brand, or dynamic - where image recognition or codes are used to dynamically update the dataset in the memory, or a combination of both methods.

This facilitates and accelerates the shopping action, since in order to obtain the goods specifications it is no more necessary to open up the transparent door, to take out the goods of interest and to read the goods specifications that are printed on the packaging of such products and optionally to put the goods back into the refrigerated sales space and to close the transparent door 8 thereafter.

Instead the goods specifications will be displayed onto the display 10 immediately.

Also, a waste of energy caused by opening up the transparent door 8 and cool air flowing out of the refrigerated sales space is reduced or even fully avoided.

The pairs of cameras 14, 16 and 18, 20 can be configured to continuously capture pictures of the viewing area 22 in front of the respective transparent door 8 or to capture pictures, particularly continuously, of the viewing area 22 in front of the respective transparent door 8 only if a person enters the viewing area 22.

The control unit 22 can be configured to continuously determine both the finger position and the finger direction of a finger 24 of a person standing in the viewing area 22 in front of the transparent door 8 by image processing of a series of at least two pictures captured by the respective camera pair 14, 16 and 18, 20.

However, it is possible that the steps of calculating the target position within the refrigerated sales space to which the finger 24 points, to associate the dataset of the goods positioned at such target position within the refrigerated sales space to the calculated target position, and to transfer the goods specification of such dataset to the display 10 for display are carried out only if the finger position and the finger direction determined by the control unit 22 remains unchanged for a predetermined period of time, for example for 1 to 8, particularly 2 to 5 sec. This ensures that goods specifications are only displayed in case this is really desired by the customer and it is avoided that the display of goods specifications is caused by an inadvertent finger movement.

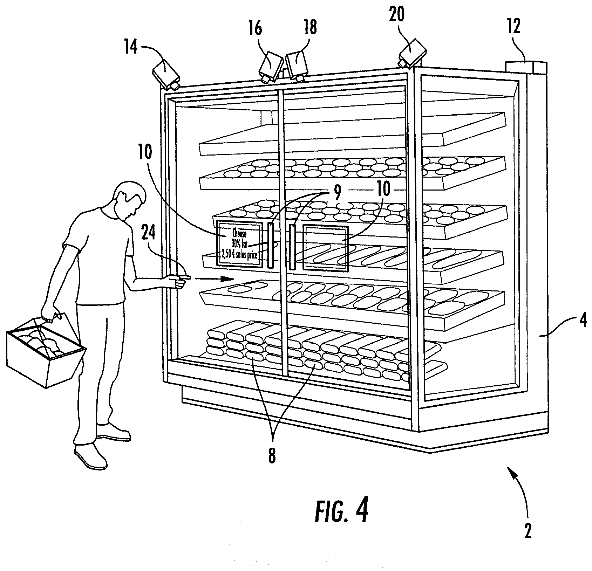

Fig. 4 shows the refrigerated sales cabinet 2 of Fig. 1 wherein the goods specifications of the goods to which the finger 24 of the customer standing in front of the refrigerated sales cabinet points, namely "cheese, 30% fat, 2,50 € sales price" are displayed on the display 10.

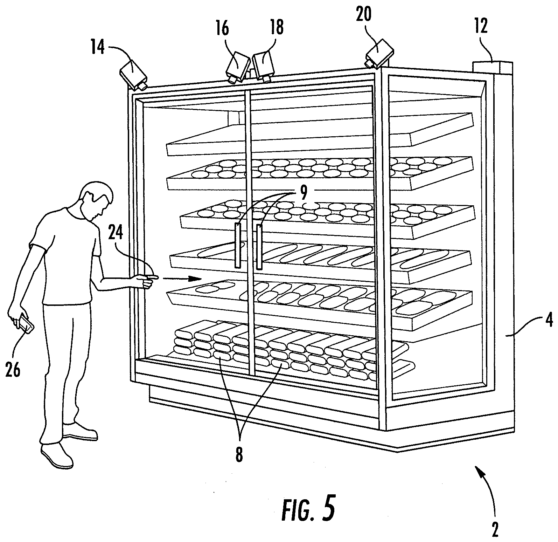

Fig. 5 shows the refrigerated sales cabinet 2 of Fig. 1 wherein the goods specifications of the goods to which the finger 24 of the customer standing in front of the refrigerated sales cabinet points are displayed on the display of a mobile device.

As an alternative to displaying the goods specifications on a display 10 at or within the glass pane of the respective transparent door 8, it is also possible to display such goods specifications on the display of a mobile device, particularly a smart device of the person standing in the viewing area 22 in front of the respective transparent door 8.

In this case, the control unit 22 of the refrigerated sales cabinet 2 can cause the display of the mobile device to display such goods specifications.

The goods specifications of the dataset can be transferred from the control unit 22 to the mobile device of the person standing in the viewing area 22 in front of the respective transparent door 8 using a mobile device network or a cloud computer system.

As multiple people can be standing in front of the refrigerated sales cabinet, algorithms to recognize which mobile device corresponds to which person 'pointing' at particular goods can be incorporated as part of the algorithms for video analytics - e.g. showing a mechanical connection between a body and a particular mobile device ID.

While the invention has been described with reference to exemplary embodiments, it will be understood by those skilled in the art that various changes may be made without departing from the scope of the claims. In addition many modifications may be made to adopt a particular situation or material to the teachings of the invention without departing from the scope of the claims. Therefore, it is intended that the invention not be limited to the particular embodiment disclosed, but that the invention includes all embodiments falling within the scope of the claims.

### List of reference numerals:

- 2: refrigerated sales cabinet
- 4: cabinet body
- 6: refrigerated sales space
- 8: hinged door
- 9: handles
- 10: display
- 12: control unit
- 14: camera
- 14r: camera viewing range
- 16: camera
- 16r: camera viewing range
- 18: camera
- 18r: camera viewing range
- 20: camera
- 20r: camera viewing range
- 22: viewing area
- 24: finger
- 26: mobile device

## Claims

1. Refrigerated sales cabinet (2) comprising
a refrigerated sales space in which different goods to be sold are stored at different positions;
a control unit (12); and
at least two cameras (14, 16; 18, 20) positioned spaced apart from each other and configured to capture pictures of a viewing area (22) in front of the refrigerated sales cabinet (2);
wherein the control unit (12) comprises or is connected to a memory, wherein the memory comprises datasets of the different goods stored in the refrigerated sales space, each dataset comprising the position of the respective goods within the refrigerated sales space and goods specifications of these goods; and
wherein the control unit (12) is configured to determine both the position and the direction of a pointing means (24) of a person standing in the viewing area (22) in front of the refrigerated sales cabinet (2) by image processing of at least two pictures captured by the at least two cameras (14,16; 18, 20);
to calculate the target position within the refrigerated sales space to which the pointing means (24) points;
to associate the dataset of the goods positioned at such target position within the refrigerated sales space to the calculated target position; and
to transfer goods specifications of such dataset to a display means for display of the goods specifications.

2. Refrigerated sales cabinet (2) of claim 1,
further comprising at least one transparent door (8); and
wherein the at least two cameras are configured to capture pictures of a viewing area in front of the at least one transparent door (8).

3. Refrigerated sales cabinet (2) of claim 2,
wherein at least two cameras (14, 16; 18, 20) are positioned at the front of the roof portion of the cabinet body of the refrigerated sales cabinet (2), particularly at left and right edges of at least one transparent door (8) of the refrigerated sales cabinet (2); and/or
wherein the at least two cameras (14, 16; 18, 20) are configured such that their viewing ranges (14r, 16r; 18r, 20r) overlap in front of the at least one transparent door (8); and/or
wherein the area in which the viewing ranges (14r, 16r; 18r, 20r) of the at least two cameras (14, 16; 18, 20) overlap forms the viewing area (22); and/or
wherein the viewing area (22) extends over substantially the entire width of the at least one transparent door (8).

4. Refrigerated sales cabinet (2) of any of the preceding claims,
wherein the pointing means is a finger (24), a hand or a fist or another object of a person standing in the viewing area (22) in front of the refrigerated sales cabinet (2), particularly in front of the at least one transparent door (8); and/or
wherein, in order to determine the position and the pointing direction of a pointing means (24) of a person standing in the viewing area (22) in front of the at least one transparent door (8), the control unit (12) is configured
to detect the pointing means (24) by image processing of at least two pictures taken from different positions by the at least two cameras (14, 16; 18, 20); and
optionally, to remove the background of the pointing means (24) and other portions of the person by image processing; and
to determine the position of the pointing means (24) in the viewing area (22) in front of the at least one transparent door (8).

5. Refrigerated sales cabinet (2) of claim 4,
wherein in order to determine the position of the pointing means (24) in the viewing area (22) in front of the at least one transparent door (8) the principle of triangulation is used, wherein the distance of the two cameras (14, 16; 18, 20) to each other is known, and wherein the angle between the vertical plane in which the two cameras (14, 16; 18, 20) are situated and the vertical plane which includes the position of the pointing means (24) is calculated; and wherein the position of the pointing means (24) in the viewing area (22) is determined from these values.

6. Refrigerated sales cabinet (2) of any of the preceding claims,
further comprising markers at, around or in the refrigerated sales cabinet (2) to improve the accuracy of the determination for pointing means position and direction.

7. Refrigerated sales cabinet (2) of any of the preceding claims,
wherein, in order to determine the pointing direction of the pointing means (24) of the person standing in the viewing area (22) in front of the at least one transparent door (8), the control unit (12) is configured to determine a pointing means direction line, particularly using the principle of triangulation for at least two distinct points of the pointing means (24).

8. Refrigerated sales cabinet (2) of claim 7,
wherein, in order to calculate the target position within the refrigerated sales space to which the pointing means (24) points, the control unit (12) is configured to extend the pointing means direction line, from the determined pointing means position, to the refrigerated sales space, particularly to a vertical plane extending through the front portion of the refrigerated sales space.

9. Refrigerated sales cabinet (2) of any of the preceding claims,
wherein the at least two cameras (14, 16; 18, 20) are configured to capture pictures of a viewing area (22) in front of the at least one transparent door (8), once a person enters the viewing area (22); and/or wherein the at least two cameras (14, 16; 18, 20) are configured to continuously capture pictures of a viewing area (22) in front of the at least one transparent door (8).

10. Refrigerated sales cabinet (2) of claim 9,
wherein the control unit (12) is configured
to continuously determine both the position and the direction of a pointing means (24) of a person standing in the viewing area (22) in front of the transparent door (8) by image processing of a series of at least two pictures captured by the at least two cameras (14, 16; 18, 20); and
to carry out one or more of the following steps only if the pointing means position and the pointing means direction determined by the control unit (12) remains unchanged for predetermined period of time:
to calculate the target position within the refrigerated sales space to which the pointing means (24) points;
to associate the dataset of the goods positioned at such target position within the refrigerated sales space to the calculated target position; and
to transfer goods specifications of such dataset to a display means for display of the goods specifications.

11. Refrigerated sales cabinet (2) of any of the preceding claims,
wherein two or more pairs of cameras (14, 16; 18, 20) are provided for laterally adjacent portions of width of the refrigerated sales cabinet (2);
wherein a first pair of cameras (14, 16) is provided and configured to capture pictures of a first viewing area (22) in front of at least one transparent door (8); and
a second pair of cameras (18, 20) is provided and configured to capture pictures of a second viewing area (22) in front of at least one transparent door (8), laterally adjacent the first viewing area (22).

12. Refrigerated sales cabinet (2) of any of the preceding claims,
where in the control unit (12) is configured to monitor how many times pointing means (24) of persons standing in the viewing area (22) in front of the transparent door (8) have pointed to which products.

13. Refrigerated sales cabinet (2) of any of the preceding claims,
wherein the display means is formed as a display (10) at the front side of the refrigerated sales cabinet (2), particularly at a transparent door (8) thereof, or as a projector configured to cause a display of the goods specifications at the front side of the refrigerated sales cabinet (2), particularly at a transparent door (8) thereof; and
wherein the control unit (12) is further configured to cause the display (10) or the projector to display the goods specifications of such dataset.

14. Arrangement of a refrigerated sales cabinet (2) of any of the preceding claims and a mobile device (26), particularly smart phone or tablet;
wherein the control unit (12) of the refrigerated sales cabinet (2) is further configured to cause the display of the mobile device (26) of the person standing in the viewing area (22) in front of the at least one transparent door (8) to display the goods specifications of such dataset.

15. Arrangement of claim 14,
wherein the arrangement, particularly the control unit (12) further comprises a video analytics algorithm to determine which mobile device corresponds to the person pointing at which product is incorporated; and/or
wherein the control unit (12) of the refrigerated sales cabinet (2) is further configured to transfer goods specifications of such dataset to the mobile device (26) of the person standing in the viewing area (22) in front of the at least one transparent door (8), using a mobile device network or a cloud computer system.

## Patentansprüche

1. Gekühltes Verkaufsregal (2), umfassend
einen gekühlten Verkaufsraum, in welchem verschiedene Waren, die verkauft werden sollen, an verschiedenen Positionen gelagert sind;
eine Steuereinheit (12); und
mindestens zwei Kameras (14, 16; 18, 20), die voneinander beabstandet positioniert sind und dazu konfiguriert sind, Bilder eines Sichtbereichs (22) vor dem gekühlten Verkaufsregal (2) zu erfassen;
wobei die Steuereinheit (12) einen Speicher umfasst oder mit einem verbunden ist, wobei der Speicher Datensätze der verschiedenen Waren umfasst, die in dem gekühlten Verkaufsraum gelagert sind, wobei jeder Datensatz die Position der jeweiligen Waren innerhalb des gekühlten Verkaufsraums und Warenspezifikationen dieser Waren umfasst; und
wobei die Steuereinheit (12) dazu konfiguriert ist, sowohl die Position als auch die Richtung einer Zeigeeinrichtung (24) einer Person, die in dem Sichtbereich (22) vor dem gekühlten Verkaufsregal (2) steht, durch Bildbearbeitung von mindestens zwei Bildern, die durch die mindestens zwei Kameras (14, 16; 18, 20) erfasst werden, zu bestimmen;
die Zielposition innerhalb des gekühlten Verkaufsraums zu berechnen, zu welcher die Zeigeeinrichtung (24) zeigt;
den Datensatz der Waren, die an solch einer Zielposition innerhalb des gekühlten Verkaufsraums positioniert sind, der berechneten Zielposition zuzuordnen; und
Warenspezifikationen solch eines Datensatzes an eine Anzeigeeinrichtung zum Anzeigen der Warenspezifikationen zu übertragen.

2. Gekühltes Verkaufsregal (2) nach Anspruch 1,
ferner umfassend mindestens eine transparente Tür (8); und
wobei die mindestens zwei Kameras dazu konfiguriert sind, Bilder eines Sichtbereichs vor der mindestens einen transparenten Tür (8) zu erfassen.

3. Gekühltes Verkaufsregal (2) nach Anspruch 2,
wobei mindestens zwei Kameras (14, 16; 18, 20) an der Front des Deckenabschnitts des Regalkörpers des gekühlten Verkaufsregals (2) positioniert sind, insbesondere an der linken und der rechten Kante von mindestens einer transparenten Tür (8) des gekühlten Verkaufsregals (2); und/oder
wobei die mindestens zwei Kameras (14, 16; 18, 20) derart konfiguriert sind, dass sich ihre Sichtbereiche (14r, 16r; 18r, 20r) vor der mindestens einen transparenten Tür (8) überlappen; und/oder
wobei der Bereich, in welchem sich die Sichtbereiche (14r, 16r; 18r, 20r) der mindestens zwei Kameras (14, 16; 18, 20) überlappen, den Sichtbereich (22) bildet; und/oder
wobei sich der Sichtbereich (22) über im Wesentlichen die gesamte Breite der mindestens einen transparenten Tür (8) erstreckt.

4. Gekühltes Verkaufsregal (2) nach einem der vorhergehenden Ansprüche,
wobei die Zeigeeinrichtung ein Finger (24), eine Hand oder eine Faust oder ein anderes Objekt einer Person ist, die in dem Sichtbereich (22) vor dem gekühlten Verkaufsregal (2), insbesondere vor der mindestens einen transparenten Tür (8), steht; und/oder
wobei die Steuereinheit (12) zum Bestimmen der Position und der Zeigerichtung einer Zeigeeinrichtung (24) einer Person, die in dem Sichtbereich (22) vor der mindestens einen transparenten Tür (8) steht, dazu konfiguriert ist,
die Zeigeeinrichtung (24) durch Bildbearbeitung von mindestens zwei Bildern, die aus verschiedenen Positionen durch die mindestens zwei Kameras (14, 16; 18, 20) gemacht werden, zu erkennen; und
optional den Hintergrund der Zeigeeinrichtung (24) und anderer Abschnitte der Person durch Bildbearbeitung zu entfernen; und
die Position der Zeigeeinrichtung (24) in dem Sichtbereich (22) vor der mindestens einen transparenten Tür (8) zu bestimmen.

5. Gekühltes Verkaufsregal (2) nach Anspruch 4,
wobei zum Bestimmen der Position der Zeigeeinrichtung (24) in dem Sichtbereich (22) vor der mindestens einen transparenten Tür (8) das Triangulationsprinzip verwendet wird, wobei der Abstand der zwei Kameras (14, 16; 18, 20) zueinander bekannt ist und wobei der Winkel zwischen der vertikalen Ebene, in welcher sich die zwei Kameras (14, 16; 18, 20) befinden, und der vertikalen Ebene, welche die Position der Zeigeeinrichtung (24) beinhaltet, berechnet wird; und wobei die Position der Zeigeeinrichtung (24) in dem Sichtbereich (22) aus diesen Werten bestimmt wird.

6. Gekühltes Verkaufsregal (2) nach einem der vorhergehenden Ansprüche,
ferner umfassend Markierungen an dem, um das oder in dem gekühlten Verkaufsregal (2), um die Genauigkeit der Bestimmung für die Position und Richtung der Zeigeeinrichtung zu verbessern.

7. Gekühltes Verkaufsregal (2) nach einem der vorhergehenden Ansprüche,
wobei die Steuereinheit (12) zum Bestimmen der Zeigerichtung der Zeigeeinrichtung (24) der Person, die in dem Sichtbereich (22) vor der mindestens einen transparenten Tür (8) steht, dazu konfiguriert ist, eine Richtungslinie der Zeigeeinrichtung zu bestimmen, insbesondere unter Verwendung des Triangulationsprinzips für mindestens zwei unterschiedliche Punkte der Zeigeeinrichtung (24).

8. Gekühltes Verkaufsregal (2) nach Anspruch 7,
wobei die Steuereinheit (12) zum Berechnen der Zielposition innerhalb des gekühlten Verkaufsraums, zu welcher die Zeigeeinrichtung (24) zeigt, dazu konfiguriert ist, dass sich die Richtungslinie der Zeigeeinrichtung von der bestimmten Position der Zeigeeinrichtung zu dem gekühlten Verkaufsraum erstreckt, insbesondere zu einer vertikalen Ebene, die sich durch den Vorderabschnitt des gekühlten Verkaufsraums erstreckt.

9. Gekühltes Verkaufsregal (2) nach einem der vorhergehenden Ansprüche,
wobei die mindestens zwei Kameras (14, 16; 18, 20) dazu konfiguriert sind, Bilder eines Sichtbereichs (22) vor der mindestens einen transparenten Tür (8) zu erfassen, sobald eine Person in den Sichtbereich (22) tritt; und/oder wobei die mindestens zwei Kameras (14, 16; 18, 20) dazu konfiguriert sind, kontinuierlich Bilder eines Sichtbereichs (22) vor der mindestens einen transparenten Tür (8) zu erfassen.

10. Gekühltes Verkaufsregal (2) nach Anspruch 9,
wobei die Steuereinheit (12) dazu konfiguriert ist,
kontinuierlich sowohl die Position als auch die Richtung einer Zeigeeinrichtung (24) einer Person, die in dem Sichtbereich (22) vor der transparenten Tür (8) steht, durch Bildbearbeitung einer Reihe von mindestens zwei Bildern, die durch die mindestens zwei Kameras (14, 16; 18, 20) erfasst werden, zu bestimmen; und
einen oder mehrere der folgenden Schritte nur dann auszuführen, wenn die Position der Zeigeeinrichtung und die Richtung der Zeigeeinrichtung, die durch die Steuereinheit (12) bestimmt werden, für einen vorbestimmten Zeitraum unverändert bleiben;
die Zielposition innerhalb des gekühlten Verkaufsraums zu berechnen, zu welcher die Zeigeeinrichtung (24) zeigt;
den Datensatz der Waren, die an solch einer Zielposition innerhalb des gekühlten Verkaufsraums positioniert sind, der berechneten Zielposition zuzuordnen; und
Warenspezifikationen solch eines Datensatzes an eine Anzeigeeinrichtung zum Anzeigen der Warenspezifikationen zu übertragen.

11. Gekühltes Verkaufsregal (2) nach einem der vorhergehenden Ansprüche,
wobei zwei oder mehr Paare von Kameras (14, 16; 18, 20) für seitlich angrenzende Breitenabschnitte des gekühlten Verkaufsregals (2) bereitgestellt sind;
wobei ein erstes Paar von Kameras (14, 16) bereitgestellt und dazu konfiguriert ist, Bilder eines ersten Sichtbereichs (22) vor mindestens einer transparenten Tür (8) zu erfassen; und
ein zweites Paar von Kameras (18, 20) bereitgestellt und dazu konfiguriert ist, Bilder eines zweiten Sichtbereichs (22) vor mindestens einer transparenten Tür (8) zu erfassen, der seitlich an den ersten Sichtbereich (22) angrenzt.

12. Gekühltes Verkaufsregal (2) nach einem der vorhergehenden Ansprüche,
wobei die Steuereinheit (12) dazu konfiguriert ist, zu überwachen, wie oft Zeigeeinrichtungen (24) von Personen, die in dem Sichtbereich (22) vor der transparenten Tür (8) stehen, auf welche Produkte gezeigt haben.

13. Gekühltes Verkaufsregal (2) nach einem der vorhergehenden Ansprüche,
wobei die Anzeigeeinrichtung als eine Anzeige (10) an der Vorderseite der gekühltes Verkaufsregal (2), insbesondere an einer transparenten Tür (8) von dieser, oder als ein Projektor ausgebildet ist, die bzw. der dazu konfiguriert ist, eine Anzeige der Warenspezifikationen an der Vorderseite der gekühlten Verkaufsregals (2), insbesondere an einer transparenten Tür (8) von dieser, zu bewirken; und
wobei die Steuereinheit (12) ferner dazu konfiguriert ist, zu bewirken, dass die Anzeige (10) oder der Projektor die Warenspezifikationen eines solchen Datensatzes anzeigt.

14. Anordnung eines gekühlten Verkaufsregals (2) nach einem der vorhergehenden Ansprüche und einer mobilen Vorrichtung (26), insbesondere Smartphone oder Tablet;
wobei die Steuereinheit (12) des gekühlten Verkaufsregals (2) ferner dazu konfiguriert ist, zu bewirken, dass die Anzeige der mobilen Vorrichtung (26) der Person, die in dem Sichtbereich (22) vor der mindestens einen transparenten Tür (8) steht, die Warenspezifikationen eines solchen Datensatzes anzeigt.

15. Anordnung nach Anspruch 14,
wobei die Anordnung, insbesondere die Steuereinheit (12), ferner einen Videoanalysealgorithmus umfasst, um zu bestimmen, welche mobile Vorrichtung der Person entspricht, die auf welches Produkt zeigt; und/oder
wobei die Steuereinheit (12) des gekühlten Verkaufsregals (2) ferner dazu konfiguriert ist, Warenspezifikationen eines solchen Datensatzes an die mobile Vorrichtung (26) der Person, die in dem Sichtbereich (22) vor der mindestens einen transparenten Tür (8) steht, unter Verwendung eines Netzwerks der mobilen Vorrichtung oder eines Cloud-Computersystems zu übertragen.

## Revendications

1. Armoire de vente réfrigérée (2) comprenant
un espace de vente réfrigéré dans lequel différentes marchandises à vendre sont stockées à différentes positions ;
une unité de commande (12) ; et
au moins deux caméras (14, 16 ; 18, 20) positionnées de manière espacée les unes des autres et conçues pour capturer des images d'une zone de vision (22) en face de l'armoire de vente réfrigérée (2) ;
dans laquelle l'unité de commande (12) contient une mémoire ou est reliée à celle-ci, dans laquelle la mémoire contient des ensembles de données des différentes marchandises stockées dans l'espace de vente réfrigéré, chaque ensemble de données comprenant la position des marchandises respectives à l'intérieur de l'espace de vente réfrigéré et des caractéristiques de marchandise de ces marchandises ; et
dans laquelle l'unité de commande (12) est conçue
pour déterminer à la fois la position et la direction d'un moyen de pointage (24) d'une personne présente dans la zone de vision (22) en face de l'armoire de vente réfrigérée (2) au moyen d'un traitement d'images d'au moins deux images capturées par les au moins deux caméras (14, 16 ; 18, 20) ;
pour calculer la position cible à l'intérieur de l'espace de vente réfrigéré qu'indique le moyen de pointage (24) ;
pour associer l'ensemble de données des marchandises positionnées à cette position cible à l'intérieur de l'espace de vente réfrigéré à la position cible calculée ; et
pour transférer des caractéristiques de marchandises de cet ensemble de données vers un moyen d'affichage destiné à afficher les caractéristiques de marchandises.

2. Armoire de vente réfrigérée (2) selon la revendication 1,
comprenant en outre au moins une porte transparente (8) ; et
dans laquelle les au moins deux caméras sont conçues pour capturer des images d'une zone de vision en face de l'au moins une porte transparente (8).

3. Armoire de vente réfrigérée (2) selon la revendication 2,
dans laquelle au moins deux caméras (14, 16 ; 18, 20) sont positionnées devant la partie de toit du corps d'armoire de l'armoire de vente réfrigérée (2), en particulier aux coins gauche et droit d'au moins une porte transparente (8) de l'armoire de vente réfrigérée (2) ; et/ou
dans laquelle les au moins deux caméras (14, 16 ; 18, 20) sont conçues de sorte que leurs champs de vision (14r, 16r ; 18r, 20r) se chevauchent en face de l'au moins une porte transparente (8) ; et/ou
dans laquelle la zone dans laquelle les champs de vision (14r, 16r ; 18r, 20r) des au moins deux caméras (14, 16 ; 18, 20) se chevauchent forme la zone de vision (22) ; et/ou
dans laquelle la zone de vision (22) s'étend sensiblement sur l'ensemble de la largeur de l'au moins une porte transparente (8) .

4. Armoire de vente réfrigérée (2) selon l'une quelconque des revendications précédentes,
dans laquelle le moyen de pointage est un doigt (24), une main, un poing ou un autre objet, d'une personne présente dans la zone de vision (22) en face de l'armoire de vente réfrigérée (2), en particulier en face de l'au moins une porte transparente (8) ; et/ou
dans laquelle, afin de déterminer la position et la direction de pointage d'un moyen de pointage (24) d'une personne présente dans la zone de vision (22) en face de l'au moins une porte transparente (8), l'unité de commande (12) est conçue
pour détecter le moyen de pointage (24) à l'aide d'un traitement d'images d'au moins deux images prises de deux positions différentes par les au moins deux caméras (14, 16 ; 18, 20) ; et
éventuellement, pour supprimer l'arrière-plan du moyen de pointage (24) et d'autres parties de la personne à l'aide d'un traitement d'images ; et
pour déterminer la position du moyen de pointage (24) dans la zone de vision (22) en face de l'au moins une porte transparente (8).

5. Armoire de vente réfrigérée (2) selon la revendication 4, dans laquelle, afin de déterminer la position du moyen de pointage (24) dans la zone de vision (22) en face de l'au moins une porte transparente (8), le principe de triangulation est utilisé, dans laquelle la distance séparant les deux caméras (14, 16 ; 18, 20) est connue, et dans laquelle l'angle entre le plan vertical, dans lequel les deux caméras (14, 16 ; 18, 20) sont situées, et le plan vertical, qui comporte la position du moyen de pointage (24), est calculé ; et dans laquelle la position du moyen de pointage (24) dans la zone de vision (22) est déterminée à partir de ces valeurs.

6. Armoire de vente réfrigérée (2) selon l'une quelconque des revendications précédentes,
comprenant en outre des marqueurs au niveau, autour ou dans l'armoire de vente réfrigérée (2) pour améliorer la précision de la détermination de la position et de la direction du moyen de pointage.

7. Armoire de vente réfrigérée (2) selon l'une quelconque des revendications précédentes,
dans laquelle, afin de déterminer la direction de pointage du moyen de pointage (24) de la personne présente dans la zone de vision (22) en face de l'au moins une porte transparente (8), l'unité de commande (12) est conçue pour déterminer une ligne de direction du moyen de pointage, en particulier à l'aide du principe de triangulation pour au moins deux points distincts du moyen de pointage (24).

8. Armoire de vente réfrigérée (2) selon la revendication 7,
dans laquelle, afin de calculer la position cible à l'intérieur de l'espace de vente réfrigéré qu'indique le moyen de pointage (24), l'unité de commande (12) est conçue pour étendre la ligne de direction du moyen de pointage, à partir de la position du moyen de pointage déterminée, vers l'espace de vente réfrigéré, en particulier vers un plan vertical traversant la partie avant de l'espace de vente réfrigéré.

9. Armoire de vente réfrigérée (2) selon l'une quelconque des revendications précédentes,
dans laquelle les aux moins deux caméras (14, 16 ; 18, 20) sont conçues pour capturer des images d'une zone de vision (22) en face de l'au moins une porte transparente (8), dès qu'une personne entre dans la zone de vision (22) ; et/ou dans laquelle les au moins deux caméras (14, 16 ; 18, 20) sont conçues pour capturer en continu des images d'une zone de vision (22) en face de l'au moins une porte transparente (8).

10. Armoire de vente réfrigérée (2) selon la revendication 9, dans laquelle l'unité de commande (12) est conçue
pour déterminer en continu à la fois la position et la direction d'un moyen de pointage (24) d'une personne présente dans la zone de vision (22) en face de la porte transparente (8) à l'aide d'un traitement d'images d'une série d'au moins deux images capturées par les au moins deux caméras (14, 16 ; 18, 20) ; et
pour exécuter une ou plusieurs des étapes suivantes seulement si la position du moyen de pointage et la direction du moyen de pointage déterminées par l'unité de commande (12) restent inchangées pendant la période prédéterminée :
pour calculer la position cible à l'intérieur de l'espace de vente réfrigéré qu'indique le moyen de pointage (24) ;
pour associer l'ensemble de données des marchandises positionnées à cette position cible à l'intérieur de l'espace de vente réfrigéré à la position cible calculée ; et
pour transférer des caractéristiques de marchandises de cet ensemble de données vers un moyen d'affichage destiné à afficher les caractéristiques de marchandises.

11. Armoire de vente réfrigérée (2) selon l'une quelconque des revendications précédentes,
dans laquelle au moins deux paires de caméras (14, 16 ; 18, 20) sont prévues pour des parties de largeur latéralement adjacentes de l'armoire de vente réfrigérée (2) ;
dans laquelle une première paire de caméras (14, 16) est prévue et conçue pour capturer des images d'une première zone de vision (22) en face d'au moins une porte transparente (8) ; et
une seconde paire de caméras (18, 20) est prévue et conçue pour capturer des images d'une seconde zone de vision (22) en face d'au moins une porte transparente (8), latéralement adjacente à la première zone de vision (22).

12. Armoire de vente réfrigérée (2) selon l'une quelconque des revendications précédentes,
dans laquelle l'unité de commande (12) est conçue pour surveiller combien de fois le moyen de pointage (24), de personnes présentes dans la zone de vision (22) en face de la porte transparente (8), a indiqué des produits en particulier.

13. Armoire de vente réfrigérée (2) selon l'une quelconque des revendications précédentes,
dans laquelle le moyen d'affichage a la forme d'un écran (10) sur le côté avant de l'armoire de vente réfrigérée (2), en particulier au niveau d'une porte transparente (8) de celle-ci, ou d'un projecteur conçu pour afficher les caractéristiques de marchandises sur le côté avant de l'armoire de vente réfrigérée (2), en particulier au niveau d'une porte transparente (8) de celle-ci ; et
dans laquelle l'unité de commande (12) est en outre conçue pour amener l'écran (10) ou le projecteur à afficher les caractéristiques de marchandises de cet ensemble de données.

14. Agencement d'une armoire de vente réfrigérée (2) selon l'une quelconque des revendications précédentes et d'un dispositif mobile (26), en particulier un téléphone intelligent ou une tablette ;
dans lequel l'unité de commande (12) de l'armoire de vente réfrigérée (2) est en outre conçue pour amener l'écran, du dispositif mobile (26) de la personne présente dans la zone de vision (22) en face de l'au moins une porte transparente (8), à afficher les caractéristiques de marchandises de cet ensemble de données.

15. Agencement selon la revendication 14,
dans lequel l'agencement, en particulier l'unité de commande (12), comprend en outre un algorithme d'analyse vidéo pour déterminer quel dispositif mobile correspond à la personne indiquant un produit en particulier ; et/ou
dans lequel l'unité de commande (12) de l'armoire de vente réfrigérée (2) est en outre conçue pour transférer des caractéristiques de marchandises de cet ensemble de données vers le dispositif mobile (26) de la personne présente dans la zone de vision (22) en face de l'au moins une porte transparente (8), au moyen d'un réseau de dispositif mobile ou d'un système informatique en nuage.
